# EUROPÄISCHE PATENTSCHRIFT

(11) **EP 0 511 485 B1**
(45) Veröffentlichungstag und Bekanntmachung des Hinweises auf die Patenterteilung: **17.07.1996**
(21) Anmeldenummer: 92104765.0
(22) Anmeldetag: 19.03.1992
(51) Int. Cl.: B25F 5/00, B25F 5/02, B25B 21/00

(54) **Arretiereinrichtung für einen Winkelkopf**
Locking device for angle head
Dispositif de bloquage pour tête angulaire

(30) Priorität: 29.04.1991 DE 4113951
(43) Veröffentlichungstag der Anmeldung: 04.11.1992
(73) Patentinhaber: C. & E. FEIN GmbH & Co., D-70176 Stuttgart (DE)
(72) Erfinder: Ludwig, Manfred, W-7000 Stuttgart 1 (DE)
(74) Vertreter: Witte, Alexander, Dr.-Ing.

(56) Entgegenhaltungen:
- DE-A- 3 243 115
- US-A- 3 789 706
- US-A- 4 155 278
- US-A- 5 020 281

## Beschreibung

Die Erfindung betrifft eine Arretiereinrichtung für einen Winkelkopf, der von einer Antriebseinheit angetrieben ist, mit einem Aufnahmestutzen, auf dem eine Büchse zur Aufnahme des Winkelkopfes verdrehbar festgelegt und in verschiedenen Winkelpositionen arretierbar ist.

Seit vielen Jahren sind zur maschinellen Verschraubung stabförmige oder pistolenförmige Antriebseinheiten gebräuchlich, in deren Antriebsstutzen Bits zur direkten Verschraubung oder Winkelgetriebe einsteckbar sind, die für schwer zugängliche Verschraubungen geeignet sind. Anstelle von Schraubeinsätzen können natürlich auch andere Einsätze wie Bohrer oder dgl. in den Antriebsstutzen eingesteckt werden.

Bei stabförmigen Antriebseinheiten spielt die Winkelposition eines Winkelkopfes relativ zur Antriebseinheit nur eine untergeordnete Rolle, da die Antriebseinheit beliebig gedreht werden kann. Dagegen ist insbesondere bei der Verwendung einer pistolenförmigen Antriebseinheit die Winkelstellung des Winkelkopfes relativ zur Antriebseinheit von besonderer Bedeutung, um ein optimales Arbeiten an schwer zugänglichen Teilen zu ermöglichen.

Aus der US-A-3 789 706 ist ein Winkelkopfgetriebe gemäß der eingangs genannten Art bekannt, das zur Verbindung mit der Antriebseinheit eine Büchse aufweist, die auf einen Aufnahmestutzen der Antriebseinheit aufsteckbar ist und in beliebigen Winkelpositionen mittels radial angeordneter Feststellschrauben auf dem Aufnahmestutzen arretierbar ist.

Mit einer derartigen Einrichtung ist zwar eine Verstellung der Winkelposition des Winkelkopfes in bezug auf die Antriebseinheit möglich, jedoch müssen hierzu in zeitraubender Weise Feststellschrauben gelöst und wieder angezogen werden.

Aus der DE-A-3 243 115 ist ein Motorschrauber mit einem Stützgriff zur Abstützung des Reaktionsmomentes bekannt, bei welchem zwischen zwei Gehäuseteilen eine lösbare Sperreinrichtung vorgesehen ist, die in Abhängigkeit von der Energiezufuhr zur Antriebseinheit gesteuert ist. Die Sperreinrichtung ist als ein Kugelgesperre mit Kugeln ausgebildet, welche bei Betätigung des Drückers der Antriebseinheit mit halbschalenförmigen Rastnuten des anderen Gehäuseteiles verriegelt, um den Stützgriff in der jeweiligen Winkelposition zu arretieren.

Bei dem vorbekannten Motorschrauber ist zwar eine Arretierung des Stützgriffes in einer bestimmten Winkelposition beim Einschalten des Schraubers gewährleistet, jedoch ist eine derartige Einrichtung nicht zur Einstellung der Winkelposition eines Winkelkopfes relativ zur Antriebseinheit geeignet. Um nämlich das Arbeiten an schwer zugänglichen Teilen zu ermöglichen, muß sich der Winkelkopf auf einfache Weise auf bestimmte Winkelpositionen voreinstellen und arretieren lassen, bevor die Antriebseinheit betätigt wird.

Weiterhin ist es bei Schraubköpfen grundsätzlich bekannt, eine Verstellung der Winkelposition des Schraubkopfes relativ zur Antriebseinheit über Kugelgesperre zu ermöglichen (DE-C-3 344 600). Bei dem vorbekannten Schraubkopf sind mehrere in Bohrungen radial bewegliche, federbelastete Kugeln vorgesehen, welche mit entsprechenden kugelkalottenförmigen Ausnehmungen des äußeren Gehäuseteils in verschiedenen Winkelpositionen verrastbar sind, um eine Voreinstellung des Abschaltmomentes des Schraubers zu erreichen.

Die vorbekannte Einrichtung ist jedoch nicht zur Voreinstellung der Winkelposition eines Winkelkopfes in bezug auf die Antriebseinheit geeignet.

Der Erfindung liegt demnach die Aufgabe zugrunde, eine Arretiereinrichtung für einen Winkelkopf der eingangs genannten Art zu schaffen, welche die Nachteile des Standes der Technik vermeidet und eine möglichst einfache Verstellung der Winkelposition des Winkelkopfes in bezug auf die Antriebseinheit erlaubt, sowie weitere Funktionsverbesserungen ermöglicht.

Diese Aufgabe wird erfindungsgemäß dadurch gelöst, daß bei einer Arretiereinrichtung gemäß der eingangs genannten Art zwischen der Büchse und dem Aufnahmestutzen zur Arretierung des Winkelkopfes an den vorgegebenen Winkelpositionen ein Kugelgesperre vorgesehen ist, das aus einer Mehrzahl von Kugeln besteht, die jeweils über axial bewegliche Stifte in Längsnuten arretierbar sind, daß zum Lösen und Arretieren des Kugelgesperres ein axial beweglicher Bedienungsring vorgesehen ist, mit dem die Stifte starr verbunden sind, und daß der Bedienungsring in Axialrichtung zur Arretierung der Kugeln federnd beaufschlagt ist.

Gemäß den Vorschlägen der Erfindung ist eine Verstellung des Winkelkopfes durch Betätigen eines Bedienungsringes ermöglicht. Dabei kann der Bedienungsring derart angeordnet sein, daß die Verstellung der Winkelposition durch Einhandbedienung erreicht werden kann. Allein ein axiales Verschieben des Bedienungsringes erlaubt ein Arretieren und Lösen des Kugelgesperres zur Verstellung der Winkelposition des Winkelkopfes.

Der Bedienungsring befindet sich normalerweise unter Wirkung der Federkraft in einer Position, in der das Kugelgesperre verriegelt ist und somit der Winkelkopf in einer vorbestimmten Winkelposition arretiert ist.

Soll nun die Winkelposition des Winkelkopfes in bezug auf die Antriebseinheit verändert werden, so wird der Bedienungsring entgegen der Federkraft axial verschoben, dadurch das Kugelgesperre freigegeben und so eine Verstellung der Winkelposition ermöglicht. Beim Loslassen des Bedienungsringes verrastet das Kugelgesperre automatisch, sobald die Kugeln bei weiterem Verdrehen des Winkelkopfes in entsprechende Längsnuten eingreifen.

In vorteilhafter Weiterbildung der Erfindung sind die Kugeln in radialen Bohrungen der Büchse radial verschieblich gehalten.

Diese Maßnahme hat den Vorteil, daß in Verbindung mit den axial beweglichen Stiften ein besonders einfacher Aufbau und eine zuverlässige Funktion auch im Dauerbetrieb und stark schwankenden Belastungen gewährleistet ist.

Bei einer weiteren vorteilhaften Ausgestaltung der Erfindung sind die Längsnuten an der Außenfläche des Aufnahmestutzens vorgesehen und die Stifte über Druckfedern in Richtung auf den Winkelkopf beaufschlagt.

Bei einem derartigen Aufbau wird die Bedienung dadurch erleichtert, daß der Bedienungsring zum Lösen des Kugelgesperres lediglich in Richtung auf die Antriebseinheit zurückgezogen werden muß, an der die Einrichtung üblicherweise an einem entsprechend geformten Handgriff gehalten wird.

Dadurch wird eine besonders einfache Bedienung ermöglicht, da ein Zurückziehen eines Bedienungsringes in Richtung auf die Bedienungsperson dem natürlichen Bewegungsablauf besonders entgegenkommt.

Bei einer vorteilhaften Weiterbildung der Erfindung sind die Druckfedern als Schraubenfedern ausgebildet, die von den Stiften axial durchsetzt sind, wobei die Druckfedern jeweils zwischen einem Bund des Stiftes und einer antriebsseitigen Ringschulter der Büchse eingeschlossen sind.

Auf diese Weise ist ein besonders platzsparender Aufbau gewährleistet.

In zweckmäßiger Weiterbildung der Erfindung weist die Büchse ein Außengewinde zur Verschraubung mit dem Winkelkopf auf.

Dadurch ist in vorteilhafter Weise bei der Verstellung der Winkelposition bei freigegebenem Kugelgesperre die notwendige Führung gewährleistet.

Obwohl der Durchmesser der Büchse natürlich verschiedenen Winkelkopfgrößen ohne weiteres anpaßbar ist, ist bei einer weiteren vorteilhaften Ausgestaltung der Erfindung eine Adapterglocke vorgesehen, die antriebsseitig mit der Büchse und winkelkopfseitig mit dem Winkelkopf verschraubbar ist.

Bei einer Verwendung einer solchen Adapterglocke lassen sich somit auch Winkelköpfe mit erheblich kleinerem Durchmesser mit der selben Arretiereinrichtung auf dem Aufnahmestutzen der Antriebseinheit in einer vorgewählten Winkelposition arretieren.

Weitere Vorteile und Einzelheiten der Erfindung ergeben sich aus der nachfolgenden Beschreibung eines bevorzugten Ausführungsbeispiels, das in der Zeichnung dargestellt ist.

Darin zeigen:
- Fig. 1: eine schematische Ansicht einer herkömmlichen Antriebseinheit zur Aufnahme einer erfindungsgemäßen Arretiereinrichtung;
- Fig. 1a: eine schematische Ansicht einer zu der Antriebseinheit gemäß Fig. 1 passenden Arretiereinrichtung;
- Fig. 1b: eine schematische Ansicht eines Winkelkopfes, der in Verbindung mit der Arretiereinrichtung gemäß Fig. 1a verwendbar ist;
- Fig. 1c: eine schematische Ansicht eines Winkelkopfes mit kleinerem Durchmesser mit einer dazugehörigen Adapterglocke;
- Fig. 2: einen Längsschnitt der Arretiereinrichtung gemäß Fig. 1a mit Winkelkopfansatz und Adapterglocke gemäß Fig. 1c in der oberen Hälfte und Winkelkopfansatz gemäß Fig. 1b in der unteren Hälfte und
- Fig. 3: einen Teilschnitt gemäß der Linie III-III gemäß Fig. 2, auf dem lediglich der Querschnitt des Aufnahmestutzens und die zugehörigen Kugeln dargestellt sind.

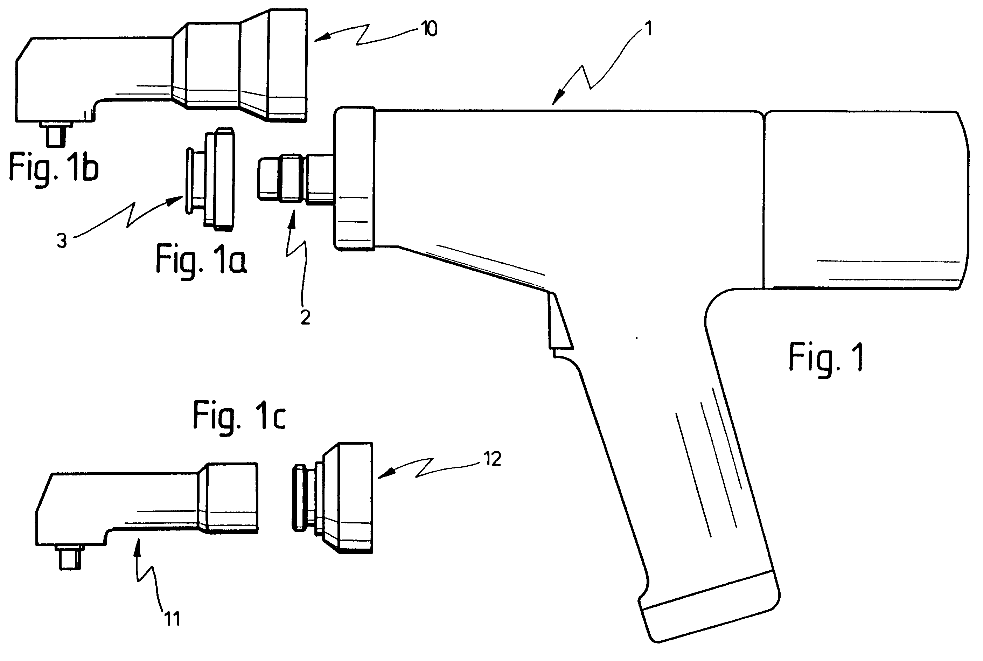

Fig. 1 zeigt eine herkömmliche Antriebseinheit 1 in Pistolenform, aus der nach vorn ein Aufnahmestutzen 2 hervorsteht, innerhalb dessen ein angetriebener Wellenstumpf vorgesehen ist. Auf den Aufnaumestutzen 2 ist eine erfindungsgemäße Arretiereinrichtung, die allgemein mit 3 bezeichnet ist und schematisch in Fig. 1a dargestellt ist, aufschraubbar. Die Arretiereinrichtung gemäß Fig. 1a weist ein Außengewinde zur Verschraubung mit einem Winkelkopf 10 gemäß Fig. 1b auf. Sollen kleinere Winkelköpfe 11 verwendet werden, so wird auf das Außengewinde der Arretiereinrichtung 3 zunächst eine Adapterglocke 12 gemäß Fig. 1c aufgeschraubt, die einen passenden Gewindeabschnitt zur Aufnahme des Winkelkopfes 11 aufweist.

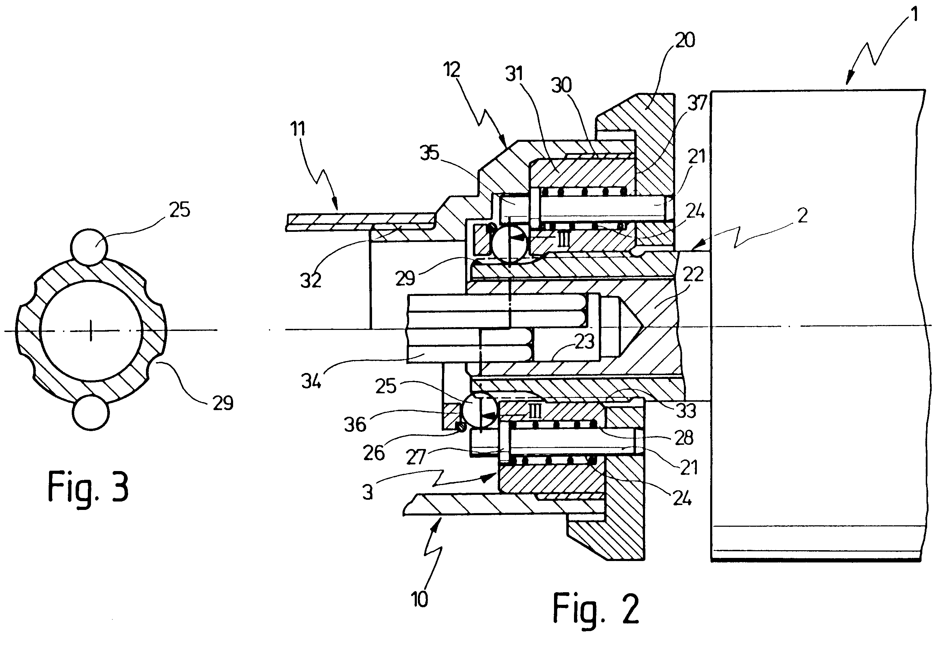

Der Aufbau der Arretiereinrichtung ist im einzelnen aus den Figuren 2 und 3 ersichtlich. Der aus dem Gehäuse der Antriebseinheit 1 hervorstehende Aufnahmestutzen 2 weist in seinem mittleren Bereich einen Außengewindeabschnitt 33 auf, auf den eine ringförmige Büchse 31 aufschraubbar ist. In der Umfangsfläche des Aufnahmestutzens 2 erstrecken sich ferner insgesamt sechs Längsnuten 29, die am freien Ende des Aufnahmestutzens beginnen und etwa nach einem Drittel des Aufnahmestutzens 2 nach außen auslaufen. In jeder Längsnut 29 ist eine Kugel 25 gehalten, die in einer radialen Bohrung 36 der Büchse 31 radial beweglich ist. Die Kugeln 25 sind durch einen O-Ring 26 gegen Herausfallen nach außen gesichert. Den Kugeln 25 sind ferner in der Büchse 31 axial verschiebbare Stifte 21 zugeordnet, die die Kugeln 25 mit ihrem winkelkopfseitigen Stiftende 35 in der in Fig. 2 dargestellten Arretierstellung von außen in ihren Bohrungen 36 sichern und somit über die Kugeln 25 und die Nuten 29 eine Verrastung der Büchse 31 in einer bestimmten Winkelstellung in bezug auf den Aufnahmestutzen 2 sicherstellen. Die Büchse 31 liegt mit ihrer antriebsseitigen Stirnfläche 37 an einem Bedienungsring 20 an, in den die Stifte 21 hineinragen und mit diesem starr verbunden sind.

Auf jedem Stift 21 ist ferner eine Schraubenfeder 24 angeordnet, die am winkelkopfseitigen Ende an einem Bund 27 des Stiftes 21 abgestützt ist und an ihrem antriebsseitigen Ende an einer Ringschulter 28 der Büchse anliegt. Durch die Federn 24 ergibt sich somit eine Federbeaufschlagung des Bedienungsrings 20 in Richtung auf die Büchse 31, so daß der Bedienungsring normalerweise an der radialen Stirnfläche 37 der Büchse 31 anliegt und gegen die Federkraft in Richtung auf die Antriebseinheit zurückgezogen werden kann.

Beim Zurückziehen des Bedienungsrings 20 geben die Stiftenden 35 die Kugeln 25 frei, so daß diese nach außen nur noch durch den O-Ring 26 gesichert sind. Wird nun die Büchse 31 auf dem Gewinde 33 des Aufnahmestutzens 2 verdreht, so gleiten die Kugeln 25 aus den Längsnuten 29 seitlich heraus, bis sie in benachbarte Längsnuten eingreifen und bei Loslassen des Bedienungsrings 20 wieder durch die Stiftenden 35 gesichert werden. Die Anzahl der Raststellungen der Büchse auf dem Aufnahmestutzen ist dabei durch die Anzahl der Längsnuten 29 - im gezeigten Ausführungsbeispiel sechs - vorgegeben. Selbstverständlich kann auch eine größere oder kleinere Anzahl vorgesehen sein. Weist der Aufnahmestutzen beispielsweise zwölf Längsnuten auf, so läßt sich die Büchse gegenüber dem Aufnahmestutzen um jeweils 30° oder ein Vielfaches davon verdrehen und verrasten. Bei einer größeren Anzahl von Längsnuten muß nicht jeder Längsnut eine Kugel mit Stift und Feder zugeordnet sein, um die Konstruktion einfach zu halten. In der Regel reichen drei Kugeln mit zugehörigen Stiften und Federn aus, die um jeweils 120° gegeneinander verdreht in der Büchse angeordnet sind.

An der Büchse 31 ist ein Außengewindeabschnitt 30 vorgesehen, auf den ein Winkelkopf 10 aufschraubbar ist, wie es in der unteren Hälfte von Fig. 2 dargestellt ist.

Soll ein Winkelkopf 11 mit kleinerem Durchmesser verwendet werden, so ist zu dessen Anpassung die Adapterglocke 12 vorgesehen, die auf den Außengewindeabschnitt 30 der Büchse 31 aufgeschraubt wird. Winkelkopfseitig ist die Adapterglocke 12 auf den gewünschten Durchmesser verjüngt und mit einem geeigneten Außengewinde 32 versehen, auf das der Winkelkopf 11 aufschraubbar ist.

Zum Antrieb des Winkelkopfes 10 bzw. 11 ist der Wellenstumpf 22 vorgesehen, der innerhalb des Aufnahmestutzens 2 angeordnet ist. Das Ende des Wellenstumpfes 22 ist als Kupplung 23 ausgebildet, in die der wellenkopfantrieb 34 zur formschlüssigen Verbindung einsteckbar ist.

## Patentansprüche

1. Arretiereinrichtung (3) für einen Winkelkopf (10, 11), der von einer Antriebseinheit (1) angetrieben ist, mit einem Aufnahmestutzen (2), auf dem eine Büchse (31) zur Aufnahme des Winkelkopfes (10, 11) verdrehbar festgelegt und in verschiedenen Winkelpositionen arretierbar ist, dadurch gekennzeichnet, daß zwischen der Büchse (31) und dem Aufnahmestutzen (2) zur Arretierung des Winkelkopfes (10, 11) in vorgegebenen Winkelpositionen ein Kugelgesperre vorgesehen ist, das aus einer Mehrzahl von Kugeln (25) besteht, die jeweils über axial bewegliche Stifte (21) in Längsnuten (29) arretierbar sind, daß zum Lösen und Arretieren des Kugelgesperres ein axial beweglicher Bedienungsring (20) vorgesehen ist, mit dem die Stifte (21) starr verbunden sind, und daß der Bedienungsring (20) in Axialrichtung zur Arretierung der Kugeln (25) federnd beaufschlagt ist.

2. Arretiereinrichtung nach Anspruch 1, dadurch gekennzeichnet, daß die Kugeln (25) in radialen Bohrungen (36) der Büchse (31) radial verschieblich gehalten sind.

3. Einrichtung nach einem der vorhergehenden Ansprüche, dadurch gekennzeichnet, daß die Längsnuten (29) an der Außenfläche des Aufnahmestutzens (2) vorgesehen sind, und daß die Stifte (21) über Druckfedern (24) in Richtung auf den Winkelkopf (10, 11) beaufschlagt sind.

4. Arretiereinrichtung nach Anspruch 3, dadurch gekennzeichnet, daß die Druckfedern (24) als Schraubenfedern ausgebildet sind, die von den Stiften (21) axial durchsetzt sind, und daß die Druckfedern (24) jeweils zwischen einem Bund (27) des Stiftes (21) und einer antriebsseitigen Ringschulter (28) der Büchse (31) eingeschlossen sind.

5. Arretiereinrichtung nach einem der vorhergehenden Ansprüche, dadurch gekennzeichnet, daß die Büchse (31) ein Außengewinde (30) zur Verschraubung mit dem Winkelkopf (10) aufweist.

6. Arretiereinrichtung nach Anspruch 5, dadurch gekennzeichnet, daß zur Aufnahme eines Winkelkopfes (11) mit kleinem Durchmesser eine Adapterglocke (12) vorgesehen ist, die antriebsseitig mit der Büchse (31) und winkelkopfseitig mit dem Winkelkopf (11) verschraubbar ist.

## Claims

1. Locking arrangement (3) for an angle head (10, 11) which is driven by a drive unit (1) having a holding support (2) on which a bush (31) is twistably secured for holding the angle head (10, 11) and can be locked in various angular positions, characterized in that there is provided, between the bush (31) and the holding support (2), for the purpose of locking the angle head (10, 11) in predetermined angular positions, a ball-type locking-up mechanism which consists of a plurality of balls (25) which are lockable, in each case, via axially movable pins (21) in longitudinal grooves (29), that an axially movable operating ring (20), to which the pins (21) are rigidly connected, is provided for releasing and locking the ball-type locking-up mechanism, and that the operating ring (20) is acted upon resiliently in the axial direction for the purpose of locking the balls (25).

2. Locking arrangement according to claim 1, characterized in that the balls (25) are held, in a radially displaceable manner, in radial bores (36) in the bush (31).

3. Arrangement according to one of the preceding claims, characterized in that the longitudinal grooves (29) are provided on the outer surface of the holding support (2) and that the pins (21) are loaded in the direction of the angle head (10, 11) via compression springs (24).

4. Locking arrangement according to claim 3, characterized in that the compression springs (24) are constructed as spiral springs through which the pins (21) pass axially, and that the said compression springs (24) are enclosed, in each case, between a collar (27) on the pin (21) and an annular shoulder (28) on the bush (31) at the drive end.

5. Locking arrangement according to one of the preceding claims, characterized in that the bush (31) has an external thread (30) for screwing it to the angle head (10).

6. Locking arrangement according to claim 5, characterized in that, for the purpose of holding an angle head (11) with a small diameter, an adapter bell (12) is provided which can be screwed to the bush (31) at the drive end and to the angle head (11) at the angle head end.

## Revendications

1. Dispositif d'arrêt (3) pour une tête coudée (10, 11), qui est entraînée par une unité d'entraînement (1), avec une tubulure de logement (2), sur laquelle est montée tournante une douille (31) destinée à recevoir la tête coudée (10, 11) et apte à être arrêtée dans diverses positions angulaires, caractérisé en ce qu'entre la douille (31) et la tubulure de logement (2) il est prévu, pour l'arrêt de la tête coudée (10, 11), dans des positions angulaires données, un dispositif d'encliquetage à billes, qui est constitué d'une pluralité de billes (25), qui peuvent être bloquées chacune dans des rainures longitudinales (29), par des broches (21) mobiles axialement, en ce que pour débloquer et bloquer le dispositif d'encliquetage à billes il est prévu un anneau de commande (20) mobile axialement, avec lequel les broches (21) sont reliées rigidement, et en ce que l'anneau de commande (20) est sollicité élastiquement, dans la direction axiale, en vue du blocage des billes (25).

2. Dispositif d'arrêt selon la revendication 1, caractérisé en ce que les billes (25) sont maintenues radialement déplaçables dans des perçages radiaux (36) de la douille (31).

3. Dispositif d'arrêt selon l'une des revendications précédentes, caractérisé en ce que les rainures longitudinales (29) sont prévues sur la surface extérieure de la tubulure de logement (2), et en ce que les broches (21) sont sollicitées par des ressorts de compression (24), en direction de la tête coudée (10, 11).

4. Dispositif d'arrêt selon la revendication 3, caractérisé en ce que les ressorts de compression (24) sont des ressorts hélicoïdaux, qui sont traversés axialement par les broches (21), et en ce que les ressorts de compression (24) sont enfermés chacun entre un épaulement (27) de la broche (21) et un épaulement annulaire (28), côté entraînement, de la douille (31).

5. Dispositif d'arrêt selon l'une des revendications précédentes, caractérisé en ce que la douille (31) présente un filetage extérieur (30) pour son vissage sur la tête coudée (10).

6. Dispositif d'arrêt selon la revendication 5, caractérisé en ce que pour loger une tête coudée (11) de petit diamètre, il est prévu une cloche d'adaptation (12), qui, côté entraînement, peut être vissée sur la douille (31) et côté tête coudée, sur la tête coudée (11).
